# EUROPEAN PATENT APPLICATION

(11) **EP 4 815 541 A1**
(43) Date of publication of application: **30.09.2026**
(21) Application number: 24893321.0
(22) Date of filing: 14.11.2024
(51) Int. Cl.: H04W 24/02

(54) **COMMUNICATION METHOD AND APPARATUS**

(30) Priority: 24.11.2023 CN 202311594226
(71) Applicant: Huawei Technologies Co., Ltd., Shenzhen, Guangdong 518129 (CN)
(72) Inventor: DONG, Lei, Shenzhen, Guangdong 518129 (CN); TANG, Hao, Shenzhen, Guangdong 518129 (CN); MA, Jianglei, Shenzhen, Guangdong 518129 (CN)
(74) Representative: Gill Jennings & Every LLP
(86) International application number: PCT/CN2024/131977
(87) International publication number: WO 2025/108163

(57) **Abstract**

This application provides a communication method and apparatus. The method includes: receiving first information, where the first information includes a first identifier and first configuration information, the first identifier identifies a feature, a functionality, or a model, the first configuration information is used for configuring all or a part of models associated with N1 features, all or a part of models associated with N2 functionalities, or N3 models, and M1, M2, N1, N2, and N3 are all positive integers; and applying the first configuration information to a first feature, a first functionality, or a first model based on the first identifier, where the first feature is at least one of the N1 features, the first functionality is at least one of the N2 functionalities, and the first model is at least one of the N3 models.

## Description

### CROSS-REFERENCE TO RELATED APPLICATIONS

This application claims priority to Chinese Patent Application No. 202311594226.4, filed with the China National Intellectual Property Administration on November 24, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

Currently, artificial intelligence (artificial intelligence, Al)/machine learning (machine learning, ML) has great application potential in many aspects such as modeling and learning in complex unknown environments, channel prediction, intelligent signal generation and processing, network status tracking and intelligent scheduling, and network optimization and deployment. AI/ML is expected to promote evolution of future communication paradigms and transformation of network architectures, and has great significance and value to 6G technology research.

AI/ML techniques rely on computational implementation of AI models. In some specific application scenarios in the field of communication technologies and related technical fields, a quantity of AI models may be very large. Therefore, how to implement efficient configuration of the AI models is an urgent technical problem to be resolved.

### SUMMARY

To resolve the foregoing technical problem, this application provides a communication method and apparatus, to implement efficient configuration of an AI module.

According to a first aspect, a communication method is provided. The method may be performed by a first communication apparatus. The first communication apparatus may be a terminal device, another device having a function of the terminal device, a chip (or a chip system, where the chip system includes a chip), another functional module, or the like. The chip system or the functional module can implement the function of the terminal device. The chip system or the functional module is, for example, disposed in the terminal device. In the following descriptions, an example in which the method is performed by the terminal device is used. The method includes: The terminal device receives first information, where the first information includes a first identifier and first configuration information, the first identifier identifies a feature, a functionality, or a model, the first configuration information is used for configuring all or a part of models associated with N1 features, all or a part of models associated with N2 functionalities, or N3 models, the N1 features correspond to M1 functionalities, the M1 functionalities correspond to M2 models, the M2 models are all or the part of the models associated with the N1 features, and M1, M2, N1, N2, and N3 are all positive integers; and the terminal device applies the first configuration information to a first feature, a first functionality, or a first model based on the first identifier, where the first feature is at least one of the N1 features, the first functionality is at least one of the N2 functionalities, and the first model is at least one of the N3 models.

Optionally, applying the first configuration information to the first feature, the first functionality, or the first model means applying the first configuration information to all or the part of the functionalities associated with the first feature, all or the part of the models associated with the first functionality, or the first model.

Optionally, associated (associated) may also be understood as corresponding.

Optionally, the term associated includes subordinate.

In the first aspect, the first information may be used for configuring a model. The first identifier may indicate a feature, a functionality, or a model, that is, may indicate that the first configuration information is a feature-level, functionality-level, or model-level configuration. Correspondingly, the first configuration information is used for configuring all or a part of models associated with N1 features, all or a part of models associated with N2 functionalities, or N3 models. In other words, the first configuration information may be used for configuring all or a part of models associated with a same feature, the first configuration information may be used for configuring all or a part of models associated with a same functionality, or the first configuration information may be used for configuring one or more models, that is, configuration does not need to be separately performed for each model, so that model configuration efficiency can be improved.

In an implementation, for example, if the first identifier indicates a feature, the first configuration information is used for configuring all or the part of the models associated with the N1 features; if the first identifier indicates a functionality, the first configuration information is used for configuring all or the part of the models associated with the N2 functionalities; or if the first identifier indicates a model, the first configuration information may be used for configuring the N3 models.

In a possible implementation, the first configuration information may be used for performing at least one of data measurement or data reporting. In other words, the first configuration information may include a data measurement parameter and/or a data reporting parameter. The data measurement parameter is, for example, a measurement object (measurement object, MO). The data reporting parameter is, for example, a reporting configuration (reporting configuration, RC).

In a possible implementation, the first information further includes a second identifier, and the second identifier identifies a feature, a functionality, or a model. The terminal device may further apply the first configuration information to a second feature, a second functionality, or a second model based on the second identifier. The second feature is at least one of the N1 features. The second feature is different from the first feature. The second functionality is at least one of the N2 functionalities. The second functionality is different from the first functionality. The second model is at least one of the N3 models. The second model is different from the first model. Based on this implementation, the first information may include a plurality of identifiers, the plurality of identifiers may correspond to different features, functionalities, or models, and the first configuration information may be used for configuring features, functionalities, or models respectively indicated by the plurality of identifiers. The plurality of identifiers may include the first identifier and the second identifier. Therefore, the first configuration information may be configured for different features, functionalities, or models indicated by the plurality of identifiers, to implement efficient configuration of an AI model. The first information may further include more identifiers other than the first identifier and the second identifier. The first configuration information may be applicable to the features, the functionalities, or the models indicated by the plurality of identifiers. This is not specifically limited in this application.

In a possible implementation, the first information further includes a second identifier and second configuration information, the second identifier identifies a feature, a functionality, or a model. The second configuration information is used for configuring all or a part of models associated with L1 features, all or a part of models associated with L2 functionalities, or L3 models. The L1 features correspond to K1 functionalities. The K1 functionalities correspond to K2 models. The K2 models are all or the part of the models associated with the L1 features. K1, K2, L1, L2, and L3 are all positive integers. The terminal device may further apply the second configuration information to a third feature, a third functionality, or a third model based on the second identifier, where the third feature is at least one of the L1 features, the third functionality is at least one of the L2 functionalities, and the third model is at least one of the L3 models. Based on this implementation, the first information may include a plurality of identifiers and a plurality of pieces of configuration information. The plurality of identifiers may correspond to different features, functionalities, or models. The plurality of pieces of configuration information may be respectively for configuring features, functionalities, or models indicated by different identifiers, to implement efficient configuration of an AI model. For example, the plurality of identifiers include the first identifier and the second identifier, and the plurality of pieces of configuration information include the first configuration information and the second configuration information. The first information may further include more identifiers other than the first identifier and the second identifier, and more configuration information other than the first configuration information and the second configuration information. This is not specifically limited in this application.

In a possible implementation, the first configuration information is used for configuring all or the part of the models associated with the N1 features, the first information further includes third configuration information, and the third configuration information is used for configuring all or the part of the models associated with the N1 features. Based on this implementation, the first information may include a plurality of pieces of configuration information, for example, include the first configuration information and the third configuration information. The first configuration information and the third configuration information may be separately applicable to a part of or all models associated with a feature or a functionality indicated by the first identifier, to implement efficient configuration of an AI model.

In a possible implementation, based on the first identifier, the terminal device may configure the first configuration information for a first part model associated with the first feature, and configure the third configuration information for a second part model associated with the first feature, where the first part model is different from the second part model. Based on this implementation, the first information may include a plurality of pieces of configuration information, including the first configuration information and the third configuration information, corresponding to the first identifier. The plurality of pieces of configuration information may be separately used for configuring a part of models of a feature or a functionality indicated by the first identifier, to implement efficient configuration of an AI model. The terminal device may determine which models the plurality of pieces of configuration information are respectively applicable to. The first information may further include more configuration information other than the first configuration information and the third configuration information. This is not specifically limited in this application. The plurality of pieces of configuration information may be respectively applicable to a part of models of a feature or a functionality indicated by the first identifier.

In a possible implementation, before receiving the first information, the terminal device may further send a first request, where the first request is used for requesting to configure the N1 features, the N2 functionalities, or the N3 models; and/or is used for requesting to provide P1 configurations for the N1 features, provide P2 configurations for the N2 functionalities, or provide P3 configurations for the N3 models. Based on this implementation, the terminal device may send the first request to an access network device, to provide a model configuration request of the terminal device, so that the access network device provides an accurate and efficient model configuration. The model configuration request may include a requirement of the terminal device for a configuration level and/or a requirement for an amount of configuration information in different levels.

In a possible implementation, that the first configuration information is used for configuring all or the part of the models associated with the N1 features, all or the part of the models associated with the N2 functionalities, or the N3 models includes: The first configuration information is used for configuring all or the part of the models associated with the N1 features at a first stage, all or the part of the models associated with the N2 functionalities at the first stage, or the N3 models at the first stage, where the first stage includes at least one of the following: a training stage, an inference stage, or a monitoring stage. Based on this implementation, a model configuration may be determined based on a training stage of a model, to implement efficient configuration of an AI model. Models at different training stages may use a same configuration or different configurations.

In a possible implementation, that the first configuration information is used for configuring all or the part of the models associated with the N1 features, all or the part of the models associated with the N2 functionalities, or the N3 models includes: The first configuration information is used for configuring all or the part of the models associated with the N1 features of a first requirement, all or the part of the models associated with the N2 functionalities of the first requirement, or the N3 models of the first requirement, where the first requirement includes at least one of the following: a high-accuracy requirement, a medium-accuracy requirement, or a low-accuracy requirement. Based on this implementation, a model configuration may be determined based on an accuracy requirement of a model, to implement efficient configuration of an AI model. Models with different accuracy requirements may use a same configuration or different configurations.

According to a second aspect, a communication method is provided. The method may be performed by a second communication apparatus. The second communication apparatus may be an access network device, another device having a function of the access network device, a chip (or a chip system, where the chip system includes a chip), another functional module, or the like. The chip system or the functional module can implement the function of the access network device. The chip system or the functional module is, for example, disposed in the access network device. In the following descriptions, an example in which the method is performed by the access network device is used. The method includes: The access network device determines and sends first information, where the first information includes a first identifier and first configuration information, the first identifier identifies a feature, a functionality, or a model, the first configuration information is used for configuring all or a part of models associated with N1 features, all or a part of models associated with N2 functionalities, or N3 models, the N1 features correspond to M1 functionalities, the M1 functionalities correspond to M2 models, the M2 models are all or the part of the models associated with the N1 features, and M1, M2, N1, N2, and N3 are all positive integers.

In a possible implementation, the first configuration information may be used for performing at least one of data measurement or data reporting.

In a possible implementation, the first information further includes a second identifier, and the second identifier identifies a feature, a functionality, or a model. The first configuration information is applied to a second feature, a second functionality, or a second model. The second feature is at least one of the N1 features. The second feature is different from the first feature. The second functionality is at least one of the N2 functionalities. The second functionality is different from the first functionality. The second model is at least one of the N3 models. The second model is different from the first model.

In a possible implementation, the first information further includes a second identifier and second configuration information, the second identifier identifies a feature, a functionality, or a model, the second configuration information is used for configuring all or a part of models associated with L1 features, all or a part of models associated with L2 functionalities, or L3 models, the L1 features correspond to K1 functionalities, the K1 functionalities correspond to K2 models, the K2 models are all or the part of the models associated with the L1 features, and K1, K2, L1, L2, and L3 are all positive integers. The second configuration information is used for configuring a third feature, a third functionality, or a third model, the third feature is at least one of the L1 features, the third functionality is at least one of the L2 functionalities, and the third model is at least one of the L3 models.

In a possible implementation, the first configuration information is used for configuring all or the part of the models associated with the N1 features, the first information further includes third configuration information, and the third configuration information is used for configuring all or the part of the models associated with the N1 features.

In a possible implementation, the first configuration information is used for a first part model associated with the first feature, and the third configuration information is used for a second part model associated with the first feature, where the first part model is different from the second part model.

In a possible implementation, before receiving the first information, the access network device may further receive a first request, where the first request is used for requesting to configure the N1 features, the N2 functionalities, or the N3 models; and/or is used for requesting to provide P1 configurations for the N1 features, provide P2 configurations for the N2 functionalities, or provide P3 configurations for the N3 models.

In a possible implementation, that the first configuration information is used for configuring all or the part of the models associated with the N1 features, all or the part of the models associated with the N2 functionalities, or the N3 models includes: The first configuration information is used for configuring all or the part of the models associated with the N1 features at a first stage, all or the part of the models associated with the N2 functionalities at the first stage, or the N3 models at the first stage, where the first stage includes at least one of the following: a training stage, an inference stage, or a monitoring stage.

In a possible implementation, that the first configuration information is used for configuring all or the part of the models associated with the N1 features, all or the part of the models associated with the N2 functionalities, or the N3 models includes: The first configuration information is used for configuring all or the part of the models associated with the N1 features of a first requirement, all or the part of the models associated with the N2 functionalities of the first requirement, or the N3 models of the first requirement, where the first requirement includes at least one of the following: a high-accuracy requirement, a medium-accuracy requirement, or a low-accuracy requirement.

For beneficial effects of the second aspect and the possible implementations of the second aspect, refer to descriptions of corresponding beneficial effects in the first aspect. Details are not described again.

According to a third aspect, a communication apparatus is provided. The apparatus is configured to implement the method according to either of the first aspect and the second aspect and the possible implementations of the first aspect and the second aspect. The apparatus is, for example, a terminal device or a chip, or a network device or a chip.

In an optional implementation, the apparatus may include modules that one-to-one correspond to the methods/operations/steps/actions described in the first aspect and the second aspect and any possible implementations of the first aspect and the second aspect. The module may be a hardware circuit or software, or may be implemented by a hardware circuit in combination with software. In an optional implementation, the apparatus includes a processing unit (sometimes also referred to as a processing module) and a communication unit (sometimes also referred to as a transceiver module, a communication module, or the like). A transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a collective term for these functional modules.

For example, when the apparatus is configured to perform the method described in any possible implementations of the first aspect and the second aspect, the apparatus may include the communication unit and the processing unit.

According to a fourth aspect, an embodiment of this application further provides a communication apparatus, including a processor, configured to execute a computer program (or computer-executable instructions) stored in a memory. When the computer program (or the computer-executable instructions) is executed, the apparatus is caused to perform the method according to either of the first aspect and the second aspect and the possible implementations of the first aspect and the second aspect.

In a possible implementation, the processor and the memory are integrated together.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or a communication interface of another type.

According to a fifth aspect, a computer-readable storage medium is provided. The computer-readable storage medium is configured to store a computer program or instructions. When the computer program or the instructions are run, the method according to any one of the first aspect, the second aspect, and the possible implementations of the first aspect and the second aspect is implemented.

According to a sixth aspect, a computer program including instructions is provided. When the computer program is run, the method according to either of the possible implementations of the first aspect and the second aspect is implemented.

According to a seventh aspect, a chip system is provided. The chip system includes a logic circuit (or is understood as that the chip system includes a processor, and the processor may include a logic circuit or the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the transceiver function in the method according to either of the first aspect and the second aspect and the possible implementations of the first aspect and the second aspect. The logic circuit may be further configured to transmit a message to the input/output interface, or receive a message from another communication apparatus through the input/output interface. The chip system may be configured to implement the method according to either of the first aspect and the second aspect and the possible implementations of the first aspect and the second aspect. The chip system may include a chip, or may include a chip and another discrete component.

Optionally, the chip system may further include a memory, and the memory may be configured to store instructions. The logic circuit may invoke the instructions stored in the memory to implement a corresponding function.

According to an eighth aspect, a communication method is provided. The communication method may include the method implemented by the first communication apparatus according to the first aspect and any possible implementations of the first aspect, and the method implemented by the second communication apparatus according to the second aspect and any possible implementations of the second aspect.

According to a ninth aspect, a communication system is provided. The communication system may include a first communication apparatus and a second communication apparatus. The first communication apparatus may be configured to implement the method according to any one of the first aspect and the possible implementations of the first aspect, and the second communication apparatus may be configured to implement the method according to any one of the second aspect and the possible implementations of the second aspect.

For technical effects brought by the third aspect to the ninth aspect, refer to descriptions of beneficial effects of corresponding solutions in the first aspect and the second aspect. Details are not described herein again.

### BRIEF DESCRIPTION OF DRAWINGS

FIG. 1 is a diagram of an architecture of a wireless communication system according to an embodiment of this application;
FIG. 2 is a diagram of a model level according to an embodiment of this application;
FIG. 3 is a schematic flowchart of a communication method according to an embodiment of this application;
FIG. 4 is a diagram of a correspondence between configuration information and level information according to an embodiment of this application;
FIG. 5 is a diagram of another correspondence between configuration information and level information according to an embodiment of this application;
FIG. 6 is a diagram of a correspondence between configuration information and stage information according to an embodiment of this application;
FIG. 7 is a diagram of another correspondence between configuration information and stage information according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

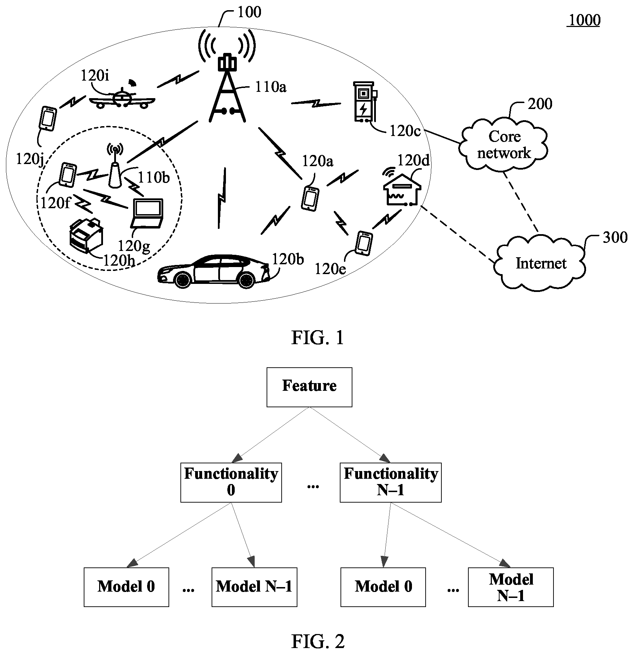

For ease of understanding of embodiments of this application, an application scenario to which this application is applicable is described by using an architecture of a communication system shown in FIG. 1 as an example. FIG. 1 is a diagram of a possible and non-limiting system. As shown in FIG. 1, the communication system 1000 includes a radio access network (radio access network, RAN) 100 and a core network (core network, CN) 200. The RAN 100 includes at least one network device (101a and 101b in FIG. 1, collectively referred to as 110) and at least one terminal device (102a to 102j in FIG. 1, collectively referred to as 102). The RAN 100 may also include another RAN node, for example, a wireless relay device and/or a wireless backhaul device (not shown in FIG. 1). The terminal device 102 is connected to the network device 101 in a wireless manner. The network device 101 is connected to the core network 200 in a wireless or wired manner. A core network device in the core network 200 and the network device 101 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4th generation (4th generation, 4G) or 5th generation (5th generation, 5G) mobile communication system, or an evolved system (for example, a 6th generation (6th generation, 6G) mobile communication system) after 5G. The RAN 100 may alternatively be an open access network (open RAN, O-RAN or ORAN), a cloud radio access network (cloud radio access network, CRAN), or a wireless fidelity (wireless fidelity, Wi-Fi) system. Alternatively, the RAN 100 may be a communication system that integrates the foregoing two or more systems.

An apparatus provided in embodiments of this application may be used in the network device 101 or the terminal device 102. It may be understood that FIG. 1 shows only one possible communication system architecture to which embodiments of this application may be applied. In another possible scenario, the communication system architecture may alternatively include another device.

Another communication system to which embodiments of this application are applied may include a first communication apparatus and a second communication apparatus.

In an implementation method, the first communication apparatus is a network device or a module used in the network device, the second communication apparatus is a terminal device or a module used in the terminal device, and the network device is, for example, an access network device. The first communication apparatus communicates with the second communication apparatus through an air interface.

In another implementation method, the first communication apparatus is a terminal device or a module used in the terminal device, and the second communication apparatus is a network device or a module used in the network device. The first communication apparatus communicates with the second communication apparatus through an air interface.

In another implementation method, the first communication apparatus is a network device or a module used in the network device, and the second communication apparatus is a network device or a module used in the network device. The first communication apparatus communicates with the second communication apparatus through an air interface or in a wired manner.

In another implementation method, the first communication apparatus is a terminal device or a module used in the terminal device, and the second communication apparatus is a terminal device or a module used in the terminal device. The first communication apparatus communicates with the second communication apparatus through an air interface.

Certainly, in embodiments of this application, the first communication apparatus and the second communication apparatus may alternatively be devices of another type. For example, the first communication apparatus may alternatively be a device, for example, a cloud device or a cloud server, and the second communication apparatus is a device, for example, a cloud device or a cloud server. This is not limited in this application.

In embodiments of this application, the terminal device may be a device having a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite). The terminal device may be a cellular phone, a mobile phone (mobile phone), a tablet computer (pad), a wireless data card, a wireless modem, a satellite terminal, a device mounted on a vehicle (for example, a car, a bicycle, an electric vehicle, an airplane, a ship, a train, or a high-speed railway), a mechanical arm, a workshop device, a wearable device (for example, a smart watch, a smart band, or a pedometer), an uncrewed aerial vehicle, a robot, a smart point of sale (point of sale, POS) machine, customer-premises equipment (customer-premises equipment, CPE), a computer having a wireless transceiver function, a virtual reality (virtual reality, VR) terminal device, an augmented reality (augmented reality, AR) terminal device, a terminal device in industrial control (industrial control), a terminal device in self-driving (self-driving), a terminal device in telemedicine (remote medical), a terminal device in a smart grid (smart grid), a terminal in transportation security (transportation safety), a terminal device in a smart city (smart city), and a terminal (for example, smart home devices such as a refrigerator, a television, an air conditioner, and a meter) in a smart home (smart home). The terminal device may alternatively be another device having a terminal function. A device form of the terminal is not limited in embodiments of this application. An apparatus configured to implement a function of the terminal device may be the terminal device, or may be an apparatus that supports the terminal device in implementing the function, for example, a chip system. The apparatus may be mounted in the terminal device or used together with the terminal device. In this embodiment of this application, the chip system may include a chip, or may include a chip and another discrete component.

In embodiments of this application, the network device is a device having a wireless transceiver function, and is configured to communicate with the terminal device or another network device. The network device may alternatively be a device, for example, a radio access network (radio access network, RAN) device or a node, that can connect the terminal device to a wireless network. In embodiments of this application, the network device may include various forms of base stations, for example, a base station (base station), an evolved NodeB (evolved NodeB, eNodeB), a next generation NodeB (next generation NodeB, gNB), a macro base station, a micro base station (which is also referred to as a small cell), a relay station, an access point, a device that implements a base station function in a communication system evolved after a 5th generation (5th generation, 5G) technology, an access point (access point, AP) in a wireless local area network (wireless local area network, WLAN) system, an integrated access and backhaul (integrated access and backhaul, IAB) node, a transmission and reception point (transmission and reception point, TRP), a transmission point (transmission point, TP), a mobile switching center, or a device that undertakes a base station function in device-to-device (Device-to-Device, D2D) communication, vehicle-to-everything (vehicle-to-everything, V2X) communication, or machine-to-machine (machine-to-machine, M2M) communication. The network device may further include a network device in a non-terrestrial network (non-terrestrial network, NTN) communication system, in other words, may be deployed on a high-altitude platform or a satellite. In some possible scenarios, different network devices respectively implement a part of functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus for implementing a function of the network device may be a network device, or may be an apparatus, for example, a chip system, that can support the network device in implementing the function. The apparatus may be mounted in the network device or used together with the network device.

In an evolution process of the communication system, a high throughput and massive connectivity have always been core challenges for a wireless communication network. To address the foregoing challenges, 5G communication proposes applications such as enhanced mobile broadband (enhanced mobile broadband, eMBB), ultra reliable and low latency communication (ultra reliable and low latency communication, URLLC), and massive machine type communication (massive machine type communication, mMTC) as technical objectives. However, a 6G communication system evolved after 5G will definitely evolve toward a direction such as a larger throughput, lower latency, higher reliability, a larger quantity of connections, and higher spectrum utilization.

With the continuous development of three driving forces of AI/ML, that is, computational power, algorithm, and data-related technologies, the AI/ML has great potential in a plurality of aspects such as modeling and learning in a complex and unknown environment, channel prediction, intelligent signal generation and processing, network status tracking and intelligent scheduling, and network optimization and deployment.

The implementation of an AI technology may depend on interaction between a plurality of devices. For a large-scale AI model, when a difference between computing capabilities of devices and a difference between storage capabilities of the devices are large, training and inference of the AI model may be performed on different devices. For example, in comparison with a terminal device, a network device having a stronger computing and storage capability may be configured to train the AI model. After model training ends, the network device may distribute the AI model to the terminal device, and the terminal device implements the inference of the AI model by using a received AI model. At an inference stage, when sample data collection is related to an environment change, and when an external environment changes, the collected sample data also changes. As a result, current sample data may not match the previously received AI model. In this case, the network device needs to deliver the updated AI model to the terminal device.

A training process of the AI model may also be jointly completed by a plurality of devices. For example, in distributed learning, a plurality of terminal devices independently train the AI model by using local sample data, and send weights (weights) or gradients (gradients) of the models in the training process to the network device. The network device performs aggregation (aggregation) processing on the received weights or gradients of the plurality of models, and then delivers an aggregation result to the plurality of terminal devices. The foregoing process repeats iteration until the model converges.

In addition, to ensure communication quality, the access network device also participates in management of the AI module. In this application, the AI module is a module implemented by using the AI technology. For example, the access network device may learn of related information of the AI module, that is, identify the AI module, and configure the AI module based on an identification result. An AI module in the terminal device may implement data measurement and/or reporting based on a configuration of the access network device.

As shown in FIG. 2, an AI module currently deployed in a terminal device may be at a feature (feature) level, a functionality (functionality) level, and a model (model) level. A functionality-level AI module is subordinate to a feature-level AI module. One feature-level AI module may include a plurality of functionality-level AI modules, or one feature-level AI module may correspond to one or more functionality-level AI modules. A model-level AI module is subordinate to the functionality-level AI module. One functionality-level AI module may include a plurality of model-level AI modules. The model-level AI module includes one AI model. Therefore, a model in FIG. 2 represents a model-level AI module or an AI model. In other words, the feature-level AI module supports one or more functionality-level AI modules, and one functionality-level AI module may support a plurality of model-level AI modules. In addition, in FIG. 2, a feature represents a feature-level AI module, and a functionality represents a functionality-level AI module.

In the following, the AI model, the model, and the model-level AI module may be considered as equivalent descriptions, and the three may be replaced with each other. In addition, in the following, the feature and the feature-level AI module may be considered as equivalent descriptions, and the two may be replaced with each other. In addition, the functionality and the functionality-level AI module may be considered as equivalent descriptions, and the two may be replaced with each other.

In an example, channel state information (channel state information, CSI) prediction may be a function of a feature-level AI module. In different scenarios and configurations, the feature-level AI module may be divided into a plurality of functionality-level AI modules. For example, CSI prediction in a low-speed scenario and CSI prediction in a high-speed scenario may be for two independent functionality-level AI modules, and the two independent functionality-level AI modules may be implemented based on different models. For example, different models in different functionalities may have different parameters such as an input, an output, a structure, a parameter, or an additional condition.

Currently, in a case in which the AI module of the terminal device is configured hierarchically, how to implement efficient configuration of the AI model by the access network device is a key problem to be urgently resolved.

To resolve the foregoing technical problem, an embodiment of this application provides a communication method. The communication method may be implemented by a first communication apparatus and a second communication apparatus. For example, the first communication apparatus may be a terminal device or a chip or module in the terminal device, and the second communication apparatus may be an access network device or a chip or module in the access network device.

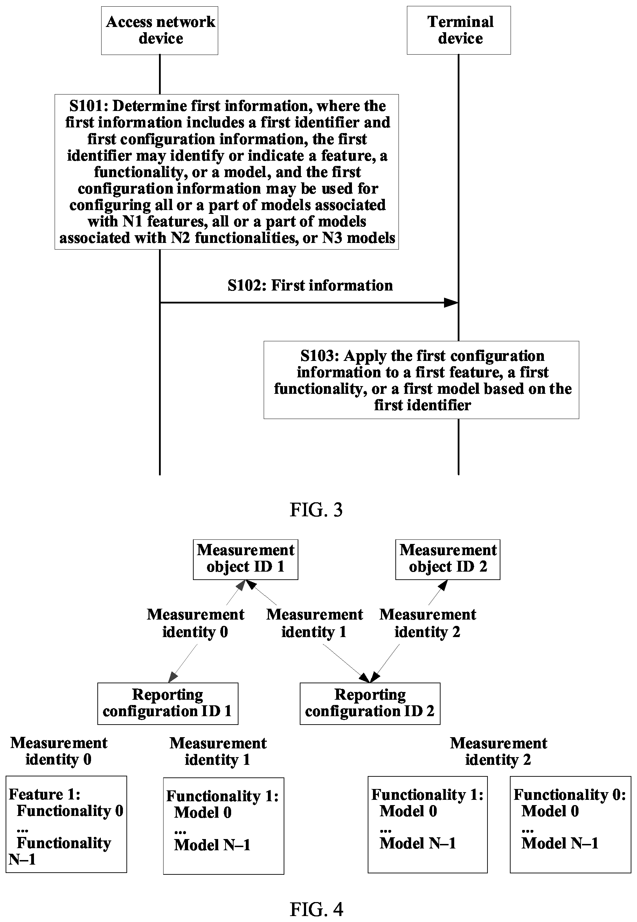

FIG. 3 is a schematic flowchart of a data transmission method according to an embodiment of this application. The method includes the following steps.

S101: An access network device determines first information.

The first information includes a first identifier and first configuration information.

The first identifier may identify or indicate a feature, a functionality, or a model.

The first configuration information may be used for configuring all or a part of models associated with N1 features, all or a part of models associated with N2 functionalities, or N3 models. The N1 features correspond to M1 functionalities, the M1 functionalities correspond to M2 models, the M2 models are all or the part of the models associated with the N1 features, and M1, M2, N1, N2, and N3 are all positive integers.

The N1 features may include the feature identified by the first identifier, the N2 functionalities may include the functionality identified by the first identifier, or the N3 models may include the model identified by the first identifier.

Therefore, the first information may be used for configuring at least one feature, at least one functionality, or at least one model.

S102: The access network device sends the first information, and correspondingly, a terminal device receives the first information.

The access network device may send the first information to the terminal device through an air interface between the access network device and the terminal device.

For example, the first information may be carried in a radio resource control (radio resource control, RRC) message, a media access control (media access control, MAC) control element (control element, CE), or downlink control information (downlink control information, DCI) that is sent by the access network device to the terminal device.

S103: The terminal device applies the first configuration information to a first feature, a first functionality, or a first model based on the first identifier, where the first feature is at least one of the N1 features, the first functionality is at least one of the N2 functionalities, and the first model is at least one of the N3 models.

The first feature may include the feature identified by the first identifier, the first functionality may include the functionality identified by the first identifier, or the first model may include the model identified by the first identifier. In this application, that configuration information is applied to a feature, a functionality, or a model may mean that the configuration information is used for configuring or setting the feature, the functionality, or the model. In other words, the configuration information is configuration information of the feature, the functionality, or the model.

Based on the procedure shown in FIG. 3, the access network device may indicate configuration information of an AI model to the terminal device by using the first information. The first information may include the first identifier and the first configuration information. The first identifier may indicate a feature, a functionality, or a model, that is, may indicate that the first configuration information is a feature-level, functionality-level, or model-level configuration. Correspondingly, the first configuration information is used for configuring all or a part of models associated with N1 features, all or a part of models associated with N2 functionalities, or N3 models. In other words, the first configuration information may be used for configuring all or a part of models associated with a same feature, the first configuration information may be used for configuring all or a part of models associated with a same functionality, or the first configuration information may be used for configuring one or more models, that is, configuration does not need to be separately performed for each model, so that model configuration efficiency can be improved.

The following separately describes the first identifier and the first configuration information.
(1) The first identifier may be a feature identifier, a functionality identifier, or a model identifier. The feature identifier may identify a feature, the functionality identifier may identify a functionality, and the model identifier may identify a model.

According to a first aspect, the first identifier may represent a configuration level. For example, the first identifier may include level information, and the level information may represent a feature level, a functionality level, or a model level. For example, the level information may be a feature, a functionality, or a model, to explicitly indicate a feature, a functionality, and a model respectively. For another example, the level information may alternatively be other symbols or numbers that are respectively associated with a feature, a functionality, and a model, to implicitly indicate the feature, the functionality, and the model. For example, level information of the feature identifier may be 0, level information of the functionality identifier may be 1, and level information of the model identifier may be 2. The level information may alternatively have another name. This is not specifically limited in this application.

According to a second aspect, the first identifier may be used for distinguishing between different features, used for distinguishing between different functionalities, or used for distinguishing between different models. For example, the first identifier includes an index, for example, a number or a sequence number.

Based on the first aspect and the second aspect, the first identifier may include two fields. A 1^{st} field may represent or indicate the level information. A 2^{nd} field may represent or indicate an index of the feature, an index of the functionality, or an index of the model. Alternatively, the first identifier may include one field, and the field indicates the level information and the index.

In an example, the feature identifier may include a feature and a number, for example, a feature 0 and a feature 1 are respectively used as different feature identifiers, and a feature may alternatively be replaced with a feature. For another example, the functionality identifier may include a functionality and a number, for example, a functionality 0 and a functionality 1 are respectively used as different functionality identifiers, and a functionality may alternatively be replaced with a functionality. For another example, the model identifier may include a model and a number, for example, a model 0 and a model 1 are respectively used as different model identifiers, and a model may alternatively be replaced with a model. In the foregoing example, the feature, the functionality, and the model may be used as the level information to explicitly indicate the feature, the functionality, and the model respectively.

In another example, the level information of the feature identifier may be 0, the level information of the functionality identifier may be 1, and the level information of the model identifier may be 2. For example, 00 indicates a feature identifier, 10 indicates a functionality identifier, and 20 indicates a model identifier.

In another example, the level information may be associated with a plurality of numbers or sequence numbers, for example, features 012 represent three features numbered 0, 1, and 2.

In another example, the level information may be distinguished by using different index intervals. For example, an index interval 0 to 9 represents 10 indexes at a feature level, indexes 10 to 19 are 10 indexes at a functionality level, and indexes 20 to 29 are 10 indexes at a model level. An index 0 represents a 1^{st} feature, an index 12 represents a 3^{rd} functionality, and so on.

It may be understood that the feature identifier, the functionality identifier, and the model identifier are alternatively implemented in a manner other than the foregoing examples. A specific manner does not fall within the limitation of this application.

(2) The first configuration information may be used as configuration information of a model.

The first configuration information may be used for configuring all or a part of models associated with N1 features, all or a part of models associated with N2 functionalities, or N3 models. The N1 features correspond to M1 functionalities, the M1 functionalities correspond to M2 models, the M2 models are all or the part of the models associated with the N1 features, and M1, M2, N1, N2, and N3 are all positive integers.

Alternatively, the first configuration information may be used as feature-level configuration information, and is used for configuring all or a part of models associated with N1 features. Alternatively, the first configuration information may be used as functionality-level configuration information, and is used for configuring all or a part of models associated with N2 functionalities. Alternatively, the first configuration information may be used as model-level configuration information, and is used for configuring N3 models.

In embodiments of this application, configuration information may be used for performing at least one of data measurement or data reporting. In other words, the first configuration information may include at least one of a data measurement parameter or a data reporting parameter. The configuration information herein may include the first configuration information, and may further include second configuration information, third configuration information, and the like that are mentioned below.

The data measurement parameter may include a parameter needed for data measurement, and may be applied to the terminal device to collect data needed for an AI model. For example, the access network device may send a reference signal to the terminal device based on the data measurement parameter, the terminal device may measure the reference signal based on the data measurement parameter, and a measurement result may be used as measurement data. The terminal device may further report the measurement result to the access network device based on the data reporting parameter, to implement data reporting. The measurement result may include a precoding matrix indicator (precoding matrix indicator, PMI), reference signal received power (reference signal received power, RSRP), reference signal received quality (reference signal received quality, RSRQ), a channel quality indicator (channel quality indicator, CQI), a rank indication (rank indication, RI), a signal to interference plus noise ratio (signal to interference plus noise ratio, SINR), or the like.

For example, the data measurement parameter is, for example, a measurement object (measurement object, MO). The measurement object may include one or more of the following parameters: a time domain resource of a to-be-measured reference signal, a frequency domain resource of the to-be-measured reference signal, or a manner of generating a sequence associated with the reference signal. The time domain resource of the to-be-measured reference signal includes, for example, parameters such as a quantity of slots occupied by the reference signal in time domain, a slot index, a quantity of symbols occupied by the reference signal in time domain, a symbol index, a periodicity, or an offset in the periodicity. The frequency domain resource of the to-be-measured reference signal includes, for example, parameters such as a carrier, a bandwidth part (bandwidth part, BWP), a resource block (resource block, RB), a resource element (resource element, RE) that are occupied by the reference signal in frequency domain, a frequency domain spacing, or a frequency hopping manner. The manner of generating the sequence associated with the reference signal may indicate or may be used for determining the sequence associated with the reference signal.

The data reporting parameter may include a data reporting parameter of the AI module. For example, the data reporting parameter is, for example, a reporting configuration (reporting configuration, RC). The reporting configuration may include one or more of the following parameters: a time domain resource or a frequency domain resource of reporting information of the terminal device. The time domain resource and/or the frequency domain resource may be used for carrying the reporting information. The reporting information may include measurement data, and the measurement data is, for example, a measurement result. The time domain resource of the reporting information includes, for example, parameters such as a quantity of slots occupied in time domain, a slot index, a quantity of symbols occupied in time domain, a symbol index, a periodicity, or an offset in the periodicity. The frequency domain resource of the reporting information includes, for example, parameters such as a carrier, a BWP, an RB, an RE that are occupied by a reference signal in frequency domain, a frequency domain spacing, or a frequency hopping manner.

In an example, the first configuration information may be a measurement configuration (measurement configuration), and the measurement configuration may include an MO and/or an RC. In a possible embodiment, the first configuration information may include a set of measurement configurations, and the set of measurement configurations may be used for configuring a plurality of models of at least one functionality in the N1 features. Alternatively, this set of measurement configurations may be used for configuring a plurality of models in the N2 functionalities.

In this application, it may be considered that the measurement configuration is specific content carried in the configuration information. In some cases, the measurement configuration and the configuration information may be replaced with each other.

For example, the access network device indicates, by using an RRC message, one or more measurement configuration IDs and a measurement configuration associated with the one or more measurement configuration IDs, for example, indicates a list including a correspondence between a measurement configuration ID and a measurement configuration. In this case, the first configuration information may include a measurement configuration ID, and the terminal device may determine, from the list based on the measurement configuration ID, a measurement configuration associated with the measurement configuration ID. In this case, the first configuration information may be carried in an RRC message, a MAC CE, or DCI that is the same as or different from the list.

In another example, the measurement object may correspond to a measurement object ID, and the reporting configuration may correspond to a reporting configuration ID. Therefore, the measurement object may be indicated by using the measurement object ID, and/or the reporting configuration may be indicated by using the reporting configuration ID. For example, the access network device indicates, by using an RRC message, one or more measurement object IDs and a measurement object associated with the one or more measurement object IDs and/or one or more reporting configuration IDs and a reporting configuration associated with the one or more measurement object IDs, for example, indicates a list including a correspondence between a measurement object ID and a measurement object and/or a correspondence between a reporting configuration ID and a reporting configuration. In this case, the first configuration information may include a measurement object ID and/or a reporting configuration ID, and the terminal device may determine, from the list based on the measurement object ID and/or the reporting configuration ID, a measurement object associated with the measurement object ID and/or a reporting configuration associated with the reporting configuration ID. In this case, the first configuration information may be carried in an RRC message, a MAC CE, or DCI that is the same as or different from the list.

Optionally, the first configuration information may include a measurement identity (measurement identity, meas ID), and the measurement identity may indicate a measurement configuration. For example, as shown in FIG. 4, a measurement identity 0 includes or corresponds to a measurement object ID 1 and a reporting configuration ID 1, that is, a measurement configuration associated with the measurement identity 0 includes the measurement object ID 1 and the reporting configuration ID 1. In addition, a measurement identity 1 corresponds to the measurement object ID 1 and a reporting configuration ID 2, and a measurement identity 2 corresponds to a measurement object ID 2 and a device configuration ID 2. It can be learned from FIG. 4 that, the measurement identity 0 corresponds to a feature 1. The feature 1 may include a functionality 0 to a functionality N-1, any functionality may include one or more models, and N is a positive integer greater than 1. In other words, in all or a part of the functionality 0 to the functionality N-1 included in the feature 1, the measurement object ID 1 and the reporting configuration ID 1 may be used for all or a part of the models.

In addition, the first configuration information may include the measurement object ID and/or the reporting configuration ID. In this case, the first configuration information may not include the measurement identity. For example, the terminal device obtains the measurement object ID and/or the reporting configuration ID based on the first configuration information, and determines, based on the measurement object ID and/or the reporting configuration ID, the measurement object and/or the reporting configuration included in the measurement configuration. Optionally, to reflect an association between the measurement object ID and the reporting configuration ID, in the first configuration information, a parameter associated with the measurement object ID may include the reporting configuration ID. In other words, the reporting configuration ID may be used as one of parameters of the measurement object associated with the measurement object ID. Alternatively, a parameter associated with the reporting configuration ID may include the measurement object ID. In other words, the measurement object ID may be used as one of parameters of the reporting configuration associated with the reporting configuration ID.

Optionally, the first identifier and the first configuration information may be carried in different fields in the first information. The first information may be an RRC message, a MAC CE, or DCI.

In a possible embodiment, the first information may further include a second identifier, so that the first configuration information may be further used for a feature, a functionality, or a model indicated by the second identifier.

The second identifier may identify a feature, a functionality, or a model.

For the second identifier, refer to the descriptions of the first identifier. A difference between the first identifier and the second identifier lies in that the first identifier may be different from the second identifier. The first identifier and the second identifier may identify different level information. For example, the first identifier identifies a feature, and in this case, the second identifier may identify a functionality or a model. In addition, when the level information is the same, the first identifier and the second identifier may have different numbers or sequence numbers. For example, if both the second identifier and the first identifier identify a feature, a number of the feature identified by the second identifier may be different from a number of the feature identified by the first identifier; if both the second identifier and the first identifier identify a functionality, a number of the functionality identified by the second identifier may be different from a number of the functionality identified by the first identifier; or if both the second identifier and the first identifier identify a model, a number of the model identified by the second identifier may be different from a number of the model identified by the first identifier.

In this embodiment, the terminal device may apply the first configuration information to a second feature, a second functionality, or a second model. The second feature may include the feature identified by the second identifier, the second functionality may include the functionality identified by the second identifier, or the second model may include the model identified by the second identifier.

In an example, the second feature is at least one of the N1 features shown in S103, the second functionality is at least one of the N2 functionalities shown in S103, and the second model is at least one of the N3 models shown in S103.

As shown in FIG. 4, the first information may include a functionality 0, a functionality 1, and a measurement identity 2. A measurement configuration associated with the measurement identity 2 may be used for the functionality 0 and the functionality 1. The functionality 0 and the functionality 1 are respectively used as the first identifier and the second identifier, and the measurement configuration associated with the measurement identity 2 may be used as the first configuration information.

Based on this embodiment, the first information may include a plurality of identifiers, for example, the first identifier and the second identifier, and the plurality of identifiers may correspond to different features, functionalities, or models. In this case, the first configuration information may be used for configuring features, functionalities, or models respectively indicated by the plurality of identifiers. The plurality of identifiers may include the first identifier and the second identifier. Therefore, the first configuration information may be configured for different features, functionalities, or models indicated by the plurality of identifiers, to implement efficient configuration of a model. The first information may further include more identifiers other than the first identifier and the second identifier. The first configuration information may be applicable to the features, the functionalities, or the models indicated by the plurality of identifiers. This is not specifically limited in this application.

In a possible embodiment, the first information may further include a second identifier and second configuration information, so that the first configuration information is applied to the feature, the functionality, or the model indicated by the first identifier, and the second configuration information is applied to a feature, a functionality, or a model indicated by the second identifier.

The second identifier may identify a feature, a functionality, or a model. The descriptions in the foregoing embodiment may still be used for the second identifier.

For the second configuration information, refer to the descriptions of the first configuration information. The second configuration information is used for configuring all or a part of models associated with L1 features, all or a part of models associated with L2 functionalities, or L3 models. The second configuration information may be the same as or different from the first configuration information. The L1 features may correspond to K1 functionalities, the K1 functionalities may correspond to K2 models, the K2 models are all or the part of the models associated with the L1 features, and K1, K2, L1, L2, and L3 are all positive integers.

In this embodiment, the terminal device may apply the second configuration information to a second feature, a second functionality, or a second model. The second feature may include the feature identified by the second identifier, the second functionality may include the functionality identified by the second identifier, or the second model may include the model identified by the second identifier.

In an example, the second feature is at least one of the L1 features, the second functionality is at least one of the L2 functionalities, and the second model is at least one of the L3 models.

As shown in FIG. 4, the first information may include a feature 1, a measurement identity 0 associated with the feature 1, a functionality 1, and a measurement identity 1 associated with the functionality 1. The feature 1 may be used as the first identifier, and correspondingly, a measurement configuration associated with the measurement identity 0 may be used as the first configuration information. In addition, the functionality 1 in FIG. 4 may be used as the second identifier, and correspondingly, a measurement configuration associated with the measurement identity 1 may be used as the second configuration information.

Based on this embodiment, the first information may include a plurality of identifiers and a plurality of pieces of configuration information. The plurality of identifiers may correspond to different features, functionalities, or models. The plurality of pieces of configuration information may be respectively for configuring features, functionalities, or models indicated by different identifiers, to implement efficient configuration of an AI model. For example, the plurality of identifiers include the first identifier and the second identifier, the plurality of pieces of configuration information include the first configuration information and the second configuration information, the first configuration information may be used for a feature, a functionality, or a model identified by the first identifier, and the second configuration information may be used for a feature, a functionality, or a model identified by the second identifier. The first information may further include more identifiers other than the first identifier and the second identifier, and more configuration information other than the first configuration information and the second configuration information. The more configuration information may be used for features, functionalities, or models identified by the more identifiers. This is not specifically limited in this application.

In a possible embodiment, the first information may further include third configuration information, so that the first configuration information and the third configuration information are respectively used for a part of models in the feature indicated by the first identifier, or the first configuration information and the third configuration information are respectively used for a part of models in the functionality identified by the first identifier.

For the third configuration information, refer to the descriptions of the first configuration information.

In this embodiment, the terminal device may configure the first configuration information for a first part model associated with the N1 features, and may configure the third configuration information for a second part model associated with the N1 features. The first part model is different from the second part model. For example, the first part model and the second part model each are a part of a plurality of models associated with the first feature. For example, the models associated with the first feature include a model 1 and a model 2, and the terminal device may configure the first configuration information for the model 1, and configure the third configuration information for the model 2.

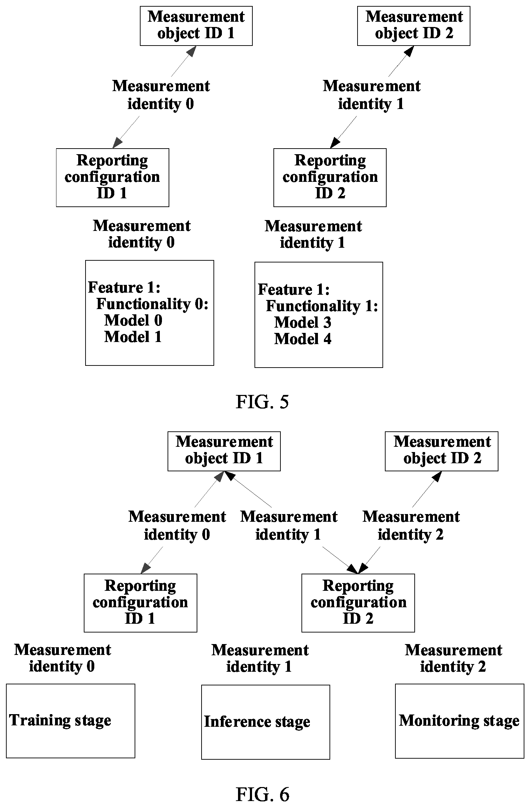

As shown in FIG. 5, the first information may include a feature 1, a measurement identity 0, and a measurement identity 1, and models associated with the feature 1 include a model 0 to a model 4. The feature 1 may be used as the first identifier. Correspondingly, a measurement configuration associated with the measurement identity 0 may be used as the first configuration information, and a measurement configuration associated with the measurement identity 1 may be used as the third configuration information. The terminal device may use the measurement configuration associated with the measurement identity 0 for the model 0 and the model 1 associated with the feature 1. In addition, the terminal device may use the measurement configuration associated with the measurement identity 0 for the model 3 and the model 4 associated with the feature 1. The model 0 and the model 1 may be used as a first part model associated with the feature 1, and the model 3 and the model 4 may be used as a second part model associated with the feature 1.

Based on this embodiment, the first information may include one identifier and a plurality of pieces of configuration information. The identifier may identify a feature or a functionality. The feature or the functionality is associated with a plurality of models. In this case, the plurality of pieces of configuration information may be respectively for configuring different models, to implement efficient configuration of an AI model.

The following describes a manner in which the access network device determines a level of configuration information. The level of the configuration information may mean that the configuration information is applied to all or a part of models in features, or all or a part of models in functionalities, or applied to one or more models.

Manner 1: The access network device may determine the level of the configuration information based on an identification result of model identification.

The model identification may mean that the terminal device provides model information of the terminal device for the access network device. The model information includes, for example, at least one of a feature identifier of a feature, a functionality identifier of a functionality, and a model identifier of a model of the terminal device, so that the access network device identifies the feature, the functionality, or the model of the terminal device, and performs configuration for the feature, the functionality, or the model of the terminal device, to improve configuration efficiency.

Optionally, the terminal device may send the model information of the terminal device to the access network device at a specific periodicity, after the terminal device accesses the access network device for the first time, or when the terminal device starts to enable the model of the terminal device.

If the access network device cannot identify the model of the terminal device, that is, can identify only the feature and/or the functionality of the terminal device, the access network device may configure feature-level or functionality-level configuration information for the terminal device.

For example, if the access network device identifies the feature of the terminal device but cannot identify the functionality and the model of the terminal device, the access network device may provide a feature-level configuration for the terminal device. For example, the access network device may send first information to the terminal device, where the first information may include a first identifier and first configuration information. The first identifier may indicate a feature, and the first configuration information may be used for configuring a model in the feature. In other words, the terminal device may apply the first configuration information to one or more models in the feature.

For another example, if the access network device identifies the functionality of the terminal device but cannot identify the model of the terminal device, the access network device may provide a functionality-level configuration for the terminal device. For example, the access network device may send first information to the terminal device, where the first information may include a first identifier and first configuration information. The first identifier may indicate a functionality, and the first configuration information may be used for configuring a model in the functionality. In other words, the terminal device may apply the first configuration information to one or more models in the functionality.

In other words, when the access network device cannot identify the model of the terminal device, a plurality of models in each feature of the terminal device may correspond to same configuration information, or a plurality of models in each functionality of the terminal device may correspond to same configuration information.

If the access network device can identify the model of the terminal device, the access network device may provide a model-level configuration for the terminal device, that is, provide a configuration for one or more models. For example, if the access network device identifies that the terminal device has a model 1 and a model 2, the access network device may separately provide a model-level configuration for the model 1 and the model 2. For example, the access network device may send first information to the terminal device, where the first information may include a first identifier, a second identifier, and first configuration information. The first identifier may indicate a model 1, the second identifier may indicate a model 2, and the first configuration information may be used for configuring the model 1 and the model 2. In other words, the terminal device may apply the first configuration information to the model 1 and the model 2. In other words, when the access network device can identify the model of the terminal device, each model of the terminal device may correspond to a set of independent configuration information.

Manner 2: The access network device may determine the level of the configuration information based on a request of the terminal device. In other words, the terminal device may explicitly indicate a needed configuration level.

In Manner 2, the terminal device may send a first request to the access network device. The first request may be used for requesting to configure N1 features, N2 functionalities, or N3 models.

The first request may include level information, to indicate a configuration level requested by the terminal device. For example, the level information may indicate a feature, a functionality, or a model. Correspondingly, the access network device may provide configuration information of a corresponding level based on the level information requested by the terminal device. For example, the access network device may provide at least one piece of configuration information, and indicate, by using an identifier associated with the configuration information, that a level to which the configuration information is applicable is a feature, a functionality, or a model. For example, the identifier herein may be a first identifier, a second identifier, or a third identifier, and the configuration information may be first configuration information, second configuration information, or third configuration information.

In addition, the first request may be further used for requesting to provide P1 configurations for the N1 features, provide P2 configurations for the N2 functionalities, or provide P3 configurations for the N3 models. In other words, the first request may carry P1 pieces of information, P2 pieces of information, or P3 pieces of information. P1, P2, or P3 may be a positive integer.

In an example, when the terminal device requests a plurality of feature-level configurations, the access network device may provide the plurality of feature-level configurations based on the request of the terminal device. The terminal device may use a feature-level configuration for a first part model in a feature, and use another feature-level configuration for a second part model in the same feature. Similarly, when the terminal device requests a plurality of functionality-level configurations, the access network device may provide the plurality of functionality-level configurations based on the request of the terminal device. The terminal device may use a functionality-level configuration for a first part model in a feature, and use another functionality-level configuration for a second part model in the same feature. An advantage of this is that in some cases, a plurality of models associated with a same feature or functionality may use a plurality of measurement configurations. For example, when structures of the plurality of models associated with the same feature or functionality are similar, the plurality of models may use a same measurement configuration.

The functionality-level configuration is used as an example. The access network device does not identify a model of the terminal device, and identifies only a functionality of the terminal device. In this case, the terminal device may request the access network device to provide a plurality of sets of measurement configurations for a functionality. After receiving the plurality of sets of measurement configurations, the terminal device may determine an association between the model and the plurality of measurement configurations. There are a plurality of measurement configurations, and all the plurality of measurement configurations correspond to a same functionality. The access network device does not need to specify an association between a measurement configuration and a model, and the terminal device determines to use a measurement configuration for a model. Optionally, in this case, the terminal device may indicate, to the access network device by using the first request, that a plurality of configurations need to be provided for a same functionality, that is, P2 is greater than 1. The terminal device may further indicate a reason, for example, structures of a plurality of models associated with the same functionality are similar. Therefore, the access network device may learn that a same measurement configuration is provided for the models with similar structures.

As shown in FIG. 5, the terminal device may request the access network device to allocate two sets of measurement configurations to a functionality 1, and the access network device may provide two sets of measurement configurations that are respectively associated with a measurement configuration ID 0 and a measurement configuration ID 1. The terminal device determines that the measurement configuration ID 0 corresponds to a model 0 and a model 1, and determines that the measurement configuration ID 1 corresponds to a second set of measurement configurations and corresponds to a model 2 and a model 3.

In embodiments of this application, a plurality of pieces of configuration information provided by the access network device may share a measurement object or a reporting configuration. The plurality of pieces of configuration information include at least one of the first configuration information, the second configuration information, or the third configuration information. For example, as shown in FIG. 4, measurement configurations that are respectively associated with a measurement identity 0 and a measurement identity 1 may have a same measurement object, that is, a measurement object whose ID is 1. For another example, measurement configurations that are respectively associated with a measurement identity 2 and the measurement identity 3 may have a same reporting configuration, that is, a reporting configuration whose ID is 2.

Specific parameters of the shared measurement object and the shared reporting configuration do not need to be repeatedly carried, to reduce channel overheads.

In this application, the terminal device may indicate, to the access network device, a sharing manner of a requested measurement configuration. The terminal device may indicate, to the access network device, a shared measurement object or a shared reporting configuration that is requested. For example, the terminal device may notify the access network device of requested sharing. For another example, a measurement object is shared. The terminal device may indicate, to the access network device, a plurality of measurement identities sharing a same measurement object, or the terminal device indicates, to the access network device, a quantity of a plurality of measurement configurations sharing a same measurement object. Correspondingly, the access network device may provide the terminal device with a corresponding shared measurement configuration based on a request of the terminal device. In addition, the access network device may alternatively determine, based on a configuration of the access network device, a plurality of measurement configurations sharing a same measurement object or reporting configuration.

In a possible embodiment, any piece of configuration information in this application may correspond to one of a plurality of stages. In this application, the plurality of stages may include a training stage (training stage), an inference stage (inference stage), or a monitoring stage (monitoring stage). In other words, any piece of configuration information may correspond to the training stage, the inference stage, or the monitoring stage. Configuration information corresponding to the training stage may be used for a model at the training stage, configuration information corresponding to the inference stage may be used for a model at the inference stage, and configuration information corresponding to the monitoring stage may be used for a model at the monitoring stage.

For example, the first configuration information may be used for all or the part of the models associated with the N1 features at a first stage, all or the part of the models associated with the N2 functionalities at the first stage, or the N3 models at the first stage. The first stage is one of the training stage, the inference stage, or the monitoring stage.

At the training stage, the model needs to collect input data and output data of the model to train the model. At the inference stage, the model needs to collect an input of the model for inference. At the monitoring stage, the model needs to collect an actual output of the model and related auxiliary information for model monitoring. Therefore, a same model may use different measurement configurations at different stages to meet requirements for data collection and/or reporting at different stages.

Specifically, at the training stage, data that needs to be collected by the model includes the input data of the model and ground truth (ground truth). Therefore, a measurement configuration at the training stage may be used for measurement and/or reporting of the input data and/or the ground truth.

At the inference stage, data that needs to be collected by the model includes the input data of the model. Therefore, a measurement configuration at the inference stage may be used for measurement and/or reporting of the input data.

At the monitoring stage, data that needs to be collected by the model includes ground truth of the model. Therefore, a measurement configuration at the inference stage may be used for measurement and/or reporting of the ground truth.

In this embodiment, configuration information may carry stage information, the stage information may indicate or identify a stage associated with the configuration information, and the stage may be referred to as the first stage. The first stage may be the training stage, the inference stage, or the monitoring stage. The configuration information herein includes but is not limited to the first configuration information, the second configuration information, or the third configuration information in this application. The stage information may alternatively have another name. This is not specifically limited in this application.

For example, when a value of the stage information is a first value, the training stage may be indicated; when a value of the stage information is a second value, the inference stage may be indicated; and when a value of the stage information is a third value, the monitoring stage may be indicated. In an example, the first value is 0, the second value is 1, and the third value is 2. In another example, the first value, the second value, and the third value are names of the training stage, the inference stage, and the monitoring stage, respectively. For example, the first value indicates training or a training stage, the second value indicates inference or an inference stage, and the third value indicates monitoring or a monitoring stage. In addition, the first value, the second value, and the third value of the level information may alternatively be set to other values. This is not specifically limited in this application.

It may be understood that the access network device may configure different measurement configurations at different stages for a same feature, functionality, or model.

In combination with the level information, if the level information indicates the feature, and the stage information indicates the first stage, the terminal may apply the configuration information to a model at the first stage of a part or all of models in the feature. When the foregoing model is at a stage other than the first stage, the configuration information may not be used. If the level information indicates the functionality, and the stage information indicates the first stage, the terminal may apply the configuration information to a model at the first stage of a part or all of models in the functionality. When the foregoing model is at a stage other than the first stage, the configuration information may not be used. If the level information indicates the model, and the stage information indicates the first stage, the terminal may apply the configuration information to the model at the first stage. When the model is at a stage other than the first stage, the configuration information may not be used.

Optionally, a measurement object may be shared at different training stages. In other words, a same measurement object may be used for models at different training stages. In addition, a reporting configuration may be shared at different training stages. In other words, a same reporting configuration may be used for models at different training stages.

As shown in FIG. 6, in an example, a measurement identity 0 corresponds to a feature 1 at a training stage, a measurement identity 1 corresponds to a feature 1 at a monitoring stage, and a measurement identity 2 corresponds to a feature 1 at an inference stage. The measurement identity 0 and the measurement identity 1 may use a same measurement object. The measurement identity 1 and the measurement identity 2 may use a same reporting configuration.

In addition, it is not excluded that one measurement configuration is shared at different training stages, that is, a measurement object and a reporting configuration are shared. For example, the measurement object and the reporting configuration may be shared at the training stage and the inference stage.

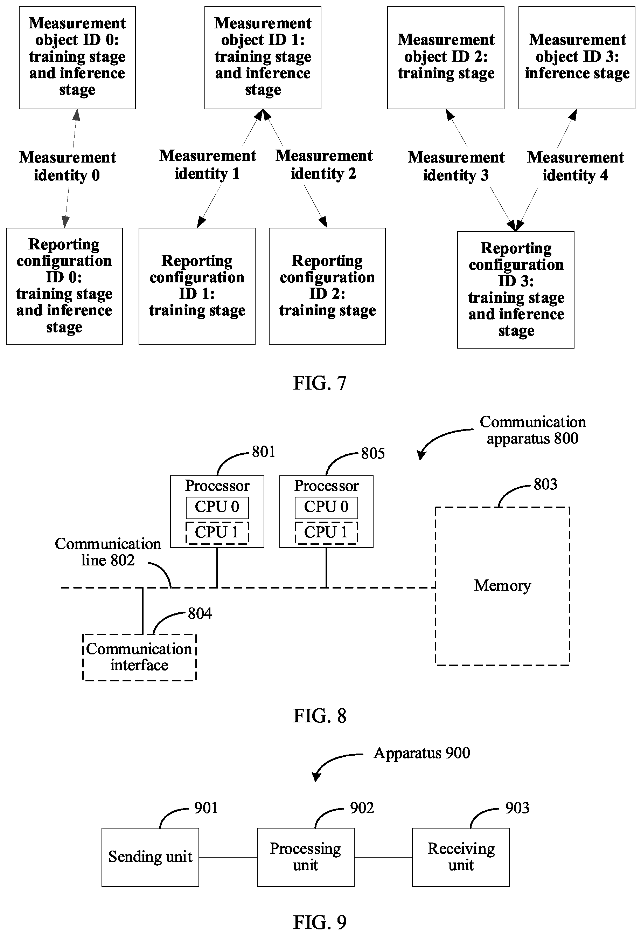

An example in which the plurality of stages are the training stage and the inference stage is used. FIG. 7 shows a case in which models at different stages share a measurement configuration when the measurement configuration is allowed to be shared at the training stage and the inference stage. Both a measurement object and a reporting configuration of a measurement configuration associated with a measurement identity 0 may be shared at the training stage and the inference stage. A measurement identity 1 and a measurement identity 2 share a measurement object whose ID is 1. The measurement identity 1 and the measurement identity 2 may respectively correspond to the training stage and the inference stage. A measurement identity 3 and a measurement identity 4 share a reporting configuration whose ID is 3. The measurement identity 3 and the measurement identity 4 may respectively correspond to the training stage and the inference stage.

In this embodiment, the access network device may indicate, by using signaling, that each stage corresponds to one set of measurement configurations or that one set of measurement configurations may be shared at a plurality of stages. For example, the access network device indicates, to the terminal device by using an RRC message, a MAC CE, or DCI, that each stage corresponds to one set of measurement configurations or that one set of measurement configurations may be shared at a plurality of stages. That each stage corresponds to one set of measurement configurations may alternatively be replaced with that different measurement configurations are used at different stages.

In this application, if each stage corresponds to one set of measurement configurations, the access network device may respectively allocate measurement configurations for different stages of a same feature, functionality, or model. For example, a training stage, an inference stage, and a monitoring stage of a same feature respectively correspond to different measurement identities. The feature herein may alternatively be replaced with a functionality or a model. If a set of measurement configurations may be shared at a plurality of stages, the access network device may provide a same measurement configuration for different stages of a plurality of different features, functionalities, or models. For example, at least two stages of a training stage, an inference stage, or a monitoring stage separately correspond to a same measurement identity, to reduce signaling overheads and configuration complexity in a configuration process.

In an implementation of this embodiment, the terminal device may request the access network device to provide a same measurement configuration for features at at least two different stages. The feature herein may alternatively be replaced with a functionality or a model. Correspondingly, the access network device may associate same configuration information with different stage information. For example, one piece of configuration information may be shared at the training stage and the inference stage. A manner of associating the configuration information with different stage information is as follows. For example, the configuration information carries stage information of each of a plurality of stages, or the configuration information and the stage information of the plurality of stages are carried in different fields of the first information. This is not specifically limited in this application.

In another implementation of this embodiment, the terminal device may request a measurement configuration for any one of the training stage, the inference stage, or the monitoring stage. Correspondingly, configuration information provided by the access network device may be specific to one stage.

The terminal device may request the access network device to respectively provide measurement configurations for features at different stages. The feature herein may alternatively be replaced with a functionality or a model. Correspondingly, the access network device may respectively provide configuration information for different stages, to provide the measurement configurations. For example, the access network device may respectively configure different measurement configurations for a training stage and an inference stage of a same feature, functionality, or model Optionally, different measurement configurations may share a same measurement object or reporting configuration.

For example, the terminal device requests the access network device to provide one measurement configuration for each of the training stage, the inference stage, and the monitoring stage. In this case, the access network device may provide three pieces of configuration information for the terminal device, and the three pieces of configuration information respectively correspond to the training stage, the inference stage, and the monitoring stage. In this example, measurement configurations at the training stage, the inference stage, and the monitoring stage may be completely independent, that is, the three measurement configurations correspond to different measurement identities.

Optionally, the terminal device may request a measurement configuration from the access network device by using a first request. The first request may carry second information, and the second information may be used for requesting to provide same or different configuration information for a plurality of stages. For example, the second information may indicate, by using 1 bit, that same configuration information or different configuration information is provided for a plurality of stages, where a value of 0 may indicate that the same configuration information is requested to be provided for the plurality of stages, and a value of 1 indicates that different configuration information is requested to be provided for the plurality of stages. For another example, a value of the second information may be set to "shared" or "non-shared", where "shared" may indicate that the same configuration information is requested to be provided for the plurality of stages, and "non-shared" may indicate that different configuration information is requested to be provided for the plurality of stages.

In addition, the first request may further carry stage information of each of the plurality of stages. The stage information is combined with the second information, and may indicate a plurality of different phases at which the terminal device requests to share same configuration information, or may indicate different stages at which the terminal device requests to use different configuration information.

FIG. 7 is used as an example. If the second information is combined with the stage information, and is used for requesting to provide a same measurement object and a same reporting configuration for a model at the training stage and a model at the inference stage, the access network device may provide, by using configuration information, a measurement configuration associated with a measurement identity 0 shown in FIG. 7. If the second information is combined with the stage information, and is for requesting to provide a same measurement object for a model at the training stage and a model at the inference stage, the access network device may provide, by using configuration information, measurement configurations associated with a measurement identity 1 and a measurement identity 2 shown in FIG. 7, and the two measurement configurations are respectively used for the model (or a functionality or a feature) at the training stage and the model (or a functionality or a feature) at the inference stage. If the second information is combined with the stage information, and is for requesting to provide a same reporting configuration for a model at the training stage and a model at the inference stage, the access network device may provide, by using configuration information, measurement configurations associated with a measurement identity 3 and a measurement identity 4 shown in FIG. 7, and the two measurement configurations are respectively used for the model (or a functionality or a feature) at the training stage and the model (or a functionality or a feature) at the inference stage.

It may be understood that a combination of the second information and the stage information may alternatively be used as independent information, for example, third information. In other words, the first request may carry the third information, and the third information may indicate a plurality of stages and indicate whether a same measurement configuration is shared at the plurality of stages. For example, the third information may be information obtained by combining the second information and the stage information. For example, a field in which the third information is located includes 1 bit and stage information of at least two stages, the 1 bit may indicate whether configuration information is shared at a plurality of stages, and the stage information may indicate the plurality of stages.

Further, optionally, the training stage may include different types such as initial training, fine tuning, and update. Different measurement configurations may be used for a same model at training stages of different types. For an implementation, refer to an implementation in which different measurement configurations are used for the model at different stages. Details are not described.

In a possible embodiment, any configuration information in this application may correspond to one of a plurality of requirements. In this application, a requirement may represent a requirement on accuracy, training duration, or the like of a model. Accuracy is used as an example. The accuracy of the model may include high accuracy, low accuracy, or medium accuracy, that is, any piece of configuration information may correspond to high accuracy, low accuracy, or medium accuracy. Configuration information corresponding to the high accuracy may be used for a high-accuracy model, configuration information corresponding to the low accuracy may be used for a low-accuracy model, and configuration information corresponding to the medium accuracy may be used for a medium-accuracy model.

In addition, the accuracy is further classified based on different levels, that is, a total of at least two different accuracy levels are included. For example, if levels of the accuracy are divided into 0 to 5, it indicates that a total of six different levels are included. Different levels may correspond to different measurement configurations.

The accuracy may alternatively be classified in another manner. This is not specifically limited in this application. For ease of description, the following uses an example in which the accuracy includes the high accuracy, the low accuracy, or the medium accuracy for description. For another implementation of the accuracy, refer to this implementation.

For example, the first configuration information may be used for all or the part of the models associated with the N1 features of a first requirement, all or the part of the models associated with the N2 functionalities of the first requirement, or the N3 models of the first requirement. An accuracy requirement is used as an example, and the first requirement is one of the high accuracy, the low accuracy, or the medium accuracy.

A high-accuracy model requires higher frequency density of a resource associated with a measurement object, a smaller time-domain periodicity, and a finer measurement granularity. For example, the high-accuracy model requires the access network device to provide a measurement configuration based on a resource element (resource element, RE) level. In addition, a reporting configuration required by the high-accuracy model needs to support reporting of a large quantity of types and a large quantity of measurement results. Compared with the measurement object required by the high-accuracy model, a measurement object required by a low-accuracy model has lower frequency density of a resource, a longer time domain periodicity, and a coarser measurement granularity. For example, the access network device needs to provide a measurement based on an RB level or a subband level. In addition, a reporting configuration of the low-accuracy model needs to support reporting of only a small quantity of types and a small quantity of measurement results. Requirements of a medium-accuracy model for a measurement object and a device configuration fall between those of the high-accuracy model and those of the low-accuracy model.

In this embodiment, configuration information may carry accuracy information, the accuracy information may indicate or identify accuracy associated with the configuration information, and the accuracy may be referred to as the first requirement. The first requirement may be high accuracy, low accuracy, or medium accuracy. The configuration information herein includes but is not limited to the first configuration information, the second configuration information, or the third configuration information in this application. The accuracy information may alternatively have another name. This is not specifically limited in this application.

For example, when a value of the accuracy information is a first value, high accuracy may be indicated; when a value of the accuracy information is a second value, low accuracy may be indicated; and when a value of the accuracy information is a third value, medium accuracy may be indicated. In an example, the first value is 0, the second value is 1, and the third value is 2. In another example, the first value, the second value, and the third value are names of the high accuracy, the low accuracy, and the medium accuracy, respectively. For example, the first value indicates high or high accuracy, the second value indicates low or low accuracy, and the third value indicates medium or medium accuracy. In addition, the first value, the second value, and the third value of the accuracy information may alternatively be set to other values. This is not specifically limited in this application.

In this application, the accuracy information may be reported by the terminal device to the access network device. For example, at a model identification stage, the terminal device may report, to the access network device, identification information related to at least one of a feature, a functionality, or a model of the terminal device. The identification information reported by the terminal device may include accuracy information of at least one of the feature, the functionality, or the model. For another example, the identification information reported by the terminal device may include information such as performance or quality of service (quality of service, QoS) of at least one of a feature, a functionality, or a model. Correspondingly, the access network device may determine accuracy information of the model based on performance or quality of service of the model.

A manner in which the access network device determines the accuracy information based on information such as performance or quality of service does not fall within the limitation of this application. In an example, the QoS may include an accuracy requirement and a latency requirement, and the accuracy requirement may indicate accuracy information required by the terminal device.

It may be understood that the access network device may configure different measurement configurations in different accuracies for a same feature, functionality, or model.

In combination with the level information, if the level information indicates the feature, and the accuracy information indicates the first requirement, a terminal may apply the configuration information to a model of the first requirement in a part of or all models in the feature. When the foregoing model is in accuracy other than the first requirement, the configuration information may not be used. If the level information indicates the functionality, and the accuracy information indicates the first requirement, the terminal may apply the configuration information to a model of the first requirement in a part of or all models in the functionality. When the foregoing model is in accuracy other than the first requirement, the configuration information may not be used. If the level information indicates the model, and the accuracy information indicates the first requirement, the terminal may apply the configuration information to the model of the first requirement. When the model is in accuracy other than the first requirement, the configuration information may not be used.

Optionally, a measurement object may be shared in different accuracies. In other words, models of different accuracies may use a same measurement object. In addition, a reporting configuration may be shared in different accuracies. In other words, models of different accuracies may use a same reporting configuration. In addition, it is not excluded that one measurement configuration may be shared in different accuracies, that is, a measurement object and a reporting configuration are shared. For example, a high-accuracy model and a medium-accuracy model share a measurement object and a reporting configuration.

Optionally, in this embodiment, the access network device may indicate, by using signaling, that each accuracy corresponds to one set of measurement configurations or that one set of measurement configurations may be shared in a plurality of accuracies. For example, the access network device indicates, to the terminal device by using an RRC message, a MAC CE, or DCI, that each accuracy corresponds to one set of measurement configurations or that one set of measurement configurations may be shared in a plurality of accuracies. That each accuracy corresponds to one set of measurement configurations may alternatively be replaced with that different measurement configurations are used in different accuracies.

In this application, if each accuracy corresponds to one set of measurement configurations, the access network device may separately allocate measurement configurations for different accuracies of a same feature, functionality, or model. For example, a same feature in high accuracy, low accuracy, or medium accuracy corresponds to different measurement identities. The feature herein may alternatively be replaced with a functionality or a model. If one set of measurement configurations may be shared in a plurality of accuracies, the access network device may provide a same measurement configuration for different accuracies of a plurality of different features, functionalities, or models. For example, at least two types of accuracies in the high accuracy, the low accuracy, or the medium accuracy may correspond to a same measurement identity, to reduce signaling overheads and configuration complexity in a configuration process.

In an implementation of this embodiment, the terminal device may request the access network device to provide a same measurement configuration for features of at least two different accuracies. The feature herein may alternatively be replaced with a functionality or a model. Correspondingly, the access network device may associate same configuration information with different accuracy information. For example, one piece of configuration information may be shared in the high accuracy and the medium accuracy. A manner of associating the configuration information and different accuracy information is as follows. For example, the configuration information carries accuracy information of each of a plurality of accuracies, or the configuration information and the accuracy information of the plurality of accuracies are carried in different fields of the first information, and so on. This is not specifically limited in this application. The accuracy information herein may be replaced with information such as performance or quality of service that is used for determining the accuracy information.

In another implementation of this embodiment, the terminal device may request a measurement configuration for any one of the high accuracy, the low accuracy, or the medium accuracy. Correspondingly, the configuration information provided by the access network device may be specific to accuracy.

The terminal device may request the access network device to respectively provide measurement configurations for features in different accuracies. The feature herein may alternatively be replaced with a functionality or a model. Correspondingly, the access network device may separately provide configuration information of a feature for different accuracies, to provide a measurement configuration. For example, the access network device may separately configure different measurement configurations for high accuracy and medium accuracy of a same feature. Optionally, different measurement configurations may share a same measurement object or reporting configuration.

For example, the terminal device requests the access network device to provide one measurement configuration for each of the high accuracy, the low accuracy, and the medium accuracy. In this case, the access network device may provide three pieces of configuration information for the terminal device, and the three pieces of configuration information respectively correspond to the high accuracy, the low accuracy, and the medium accuracy. In this example, high-accuracy, low-accuracy, and medium-accuracy measurement configurations may be completely independent, that is, the three measurement configurations correspond to different measurement identities.

Optionally, the terminal device may request a measurement configuration from the access network device by using a first request. The first request may carry fourth information, and the fourth information may be used for requesting to provide same or different configuration information for a plurality of accuracies. For example, the fourth information may indicate, by using 1 bit, that same or different configuration information is provided for a plurality of accuracies. A value of 0 may indicate that the same configuration information is requested to be provided for the plurality of accuracies, and a value of 1 indicates that different configuration information is requested to be provided for the plurality of accuracies. For another example, a value of the fourth information may be set to "shared" or "non-shared", where "shared" may indicate that the same configuration information is requested to be provided for a plurality of accuracies, and "non-shared" may indicate that different configuration information is requested to be provided for the plurality of accuracies.

In addition, the first request may further carry accuracy information of each of the plurality of accuracies. The stage information is combined with the fourth information, and may indicate a plurality of different accuracies in which the terminal device requests to share same configuration information, or may indicate different accuracies in which the terminal device requests to use different configuration information.

It may be understood that a combination of the fourth information and the accuracy information may alternatively be used as independent information, for example, fifth information. In other words, the first request may carry fifth information, and the fifth information may indicate a plurality of accuracies and indicate whether a same measurement configuration is shared in the plurality of accuracies. For example, the fifth information may be information obtained by combining the fourth information and the accuracy information. For example, a field in which the fifth information is located includes 1 bit and accuracy information of at least two accuracies, the 1 bit may indicate whether configuration information is shared in a plurality of accuracies, and the accuracy information may indicate the plurality of accuracies.

It may be understood that, to implement functions in the foregoing embodiments, an embodiment of this application further provides a communication apparatus. The communication apparatus may include a corresponding hardware structure and/or software module for performing each function of the foregoing terminal device and/or the foregoing access network device. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

FIG. 8 is a diagram of a structure of a communication apparatus according to an embodiment of this application. The communication apparatus 800 may be the terminal device shown in FIG. 3 or a circuit system in the terminal device, and is configured to implement the method corresponding to the terminal device in the foregoing method embodiment. Alternatively, the communication apparatus 800 may be the access network device in the embodiment shown in FIG. 3 or a circuit system of the access network device, and is configured to implement the method corresponding to the access network device in the foregoing method embodiments. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 800 includes one or more memories 803 configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 802 may include a path on which information is transferred between the foregoing components.

The communication interface 804 is any apparatus like a transceiver, and is configured to communicate with another device or a communication network, for example, an ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Bluray disc, or the like), a magnetic disk storage medium or another magnetic storage device, or any other medium that can carry or store expected program code in a form of instructions or a data structure and that can be accessed by a computer. This is not limited thereto. The memory 803 may exist independently, and is connected to the processor 801 through the communication line 802. Alternatively, the memory 803 may be integrated with the processor 801.

The memory 803 is configured to store computer-executable instructions for executing the solutions of this application, and the processor 801 controls execution. The processor 801 is configured to execute the computer-executable instructions stored in the memory 803, to implement the steps performed by the UE or the network device in the embodiment shown in FIG. 3.

Optionally, the computer-executable instructions in embodiments of this application may also be referred to as application program code. This is not specifically limited in embodiments of this application.

During specific implementation, in an embodiment, the processor 801 may include one or more CPUs, for example, a CPU 0 and a CPU 1 shown in FIG. 8.

During specific implementation, in an embodiment, the communication apparatus 800 may include a plurality of processors, for example, the processor 801 and a processor 805 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip of the UE or a chip of the network device, the chip includes the processor 801 (and may further include the processor 805), the communication line 802, and the communication interface 804. Optionally, the chip may include the memory 803. Specifically, the communication interface 804 may be an input interface, a pin, a circuit, or the like. The memory 803 may be a register, a buffer, or the like. The processor 801 and the processor 805 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when the functional modules are obtained through division based on corresponding functions, FIG. 9 is a diagram of an apparatus. The apparatus 900 may include the UE or the network device in the foregoing method embodiments, or include a chip in the UE or a chip in the network device. The apparatus 900 includes a sending unit 901, a processing unit 902, and a receiving unit 903.

It should be understood that the apparatus 900 may be configured to implement the steps performed by the UE or the network device in the communication method in embodiments of this application. For related features, refer to the embodiment shown in FIG. 3. Details are not described herein again.

Optionally, functions/implementation processes of the sending unit 901, the receiving unit 903, and the processing unit 902 in FIG. 9 may be implemented by the processor 801 in FIG. 8 by invoking the computer-executable instructions stored in the memory 803. Alternatively, functions/implementation processes of the processing unit 902 in FIG. 9 may be implemented by the processor 801 in FIG. 8 by invoking the computer-executable instructions stored in the memory 803, and functions/implementation processes of the sending unit 901 and the receiving unit 903 in FIG. 9 may be implemented by the communication interface 804 in FIG. 8.

Optionally, when the apparatus 900 is a chip or a circuit, the functions/implementation processes of the sending unit 901 and the receiving unit 903 may alternatively be implemented by a pin, a circuit, or the like.

This application further provides a computer-readable storage medium. The computer-readable storage medium stores a computer program or instructions. When the computer program or the instructions are run, the method performed by the UE or the network device in the foregoing method embodiment is implemented. In this way, the functions in the foregoing embodiments may be implemented in a form of a software functional unit and sold or used as an independent product. Based on such an understanding, the technical solutions of this application essentially, or the part having contribution, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the UE or the network device in any one of the foregoing method embodiments.

An embodiment of this application further provides a processing apparatus, including a processor and an interface. The processor is configured to perform the method performed by the UE or the network device in any one of the foregoing method embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like.

Various illustrative logical units and circuits described in embodiments of this application may implement or operate the described functions by a general-purpose processor, a digital signal processor (digital signal processor, DSP), an ASIC, a field-programmable gate array (field-programmable gate array, FPGA) or another programmable logical apparatus, a discrete gate or transistor logic, a discrete hardware component, or a design of any combination thereof. The general-purpose processor may include a microprocessor. Optionally, the general-purpose processor may alternatively include any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or any other form of storage medium in the art. For example, the storage medium may connect to a processor so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the UE and/or the network device may perform a part or all of the steps in embodiments of this application. The steps or operations are merely examples. In embodiments of this application, other operations or variations of various operations may be further performed. In addition, the steps may be performed in a sequence different from that presented in embodiments of this application, and not all the operations in embodiments of this application may be necessarily performed.

## Claims

1. A communication method, comprising:
receiving first information, wherein the first information comprises a first identifier and first configuration information, the first identifier identifies a feature, a functionality, or a model, the first configuration information is used for configuring all or a part of models associated with N1 features, all or a part of models associated with N2 functionalities, or N3 models, the N1 features correspond to M1 functionalities, the M1 functionalities correspond to M2 models, the M2 models are all or the part of the models associated with the N1 features, and M1, M2, N1, N2, and N3 are all positive integers; and
applying the first configuration information to a first feature, a first functionality, or a first model based on the first identifier, wherein the first feature is at least one of the N1 features, the first functionality is at least one of the N2 functionalities, and the first model is at least one of the N3 models.

2. The method according to claim 1, wherein the first configuration information is used for performing at least one of data measurement or data reporting.

3. The method according to claim 1 or 2, wherein the first information further comprises a second identifier, and the second identifier identifies a feature, a functionality, or a model; and
the method further comprises:
applying the first configuration information to a second feature, a second functionality, or a second model based on the second identifier, wherein the second feature is at least one of the N1 features, the second feature is different from the first feature, the second functionality is at least one of the N2 functionalities, the second functionality is different from the first functionality, the second model is at least one of the N3 models, and the second model is different from the first model.

4. The method according to claim 1 or 2, wherein the first information further comprises a second identifier and second configuration information, the second identifier identifies a feature, a functionality, or a model, the second configuration information is used for configuring all or a part of models associated with L1 features, all or a part of models associated with L2 functionalities, or L3 models, the L1 features correspond to K1 functionalities, the K1 functionalities correspond to K2 models, the K2 models are all or the part of the models associated with the L1 features, and K1, K2, L1, L2, and L3 are all positive integers; and
the method further comprises:
applying the second configuration information to a third feature, a third functionality, or a third model based on the second identifier, wherein the third feature is at least one of the L1 features, the third functionality is at least one of the L2 functionalities, and the third model is at least one of the L3 models.

5. The method according to claim 1 or 2, wherein the first configuration information is used for configuring all or the part of the models associated with the N1 features, the first information further comprises third configuration information, and the third configuration information is used for configuring all or the part of the models associated with the N1 features.

6. The method according to claim 5, wherein applying the first configuration information to the first feature based on the first identifier comprises:
based on the first identifier, configuring the first configuration information for a first part model associated with the first feature, and configuring the third configuration information for a second part model associated with the first feature, wherein
the first part model is different from the second part model.

7. The method according to any one of claims 1 to 6, wherein before receiving the first information, the method further comprises:
sending a first request, wherein the first request is used for requesting to configure the N1 features, the N2 functionalities, or the N3 models; and/or is used for requesting to provide P1 configurations for the N1 features, provide P2 configurations for the N2 functionalities, or provide P3 configurations for the N3 models, and P1, P2, and P3 are all positive integers.

8. The method according to any one of claims 1 to 7, wherein that the first configuration information is used for configuring all or the part of the models associated with the N1 features, all or the part of the models associated with the N2 functionalities, or the N3 models comprises:
the first configuration information is used for configuring all or the part of the models associated with the N1 features at a first stage, all or the part of the models associated with the N2 functionalities at the first stage, or the N3 models at the first stage, wherein
the first stage comprises at least one of the following: a training stage, an inference stage, or a monitoring stage.

9. The method according to any one of claims 1 to 8, wherein that the first configuration information is used for configuring all or the part of the models associated with the N1 features, all or the part of the models associated with the N2 functionalities, or the N3 models comprises:
the first configuration information is used for configuring all or the part of the models associated with the N1 features of a first requirement, all or the part of the models associated with the N2 functionalities of the first requirement, or the N3 models of the first requirement, wherein
the first requirement comprises at least one of the following: a high-accuracy requirement, a medium-accuracy requirement, or a low-accuracy requirement.

10. A communication method, comprising:
determining first information, wherein the first information comprises a first identifier and first configuration information, the first identifier identifies a feature, a functionality, or a model, the first configuration information is used for configuring all or a part of models associated with N1 features, all or a part of models associated with N2 functionalities, or N3 models, the N1 features correspond to M1 functionalities, the M1 functionalities correspond to M2 models, the M2 models are all or the part of the models associated with the N1 features, and M1, M2, N1, N2, and N3 are all positive integers; and
sending the first information.

11. The method according to claim 10, wherein the first configuration information is used for performing at least one of data measurement or data reporting.

12. The method according to claim 10 or 11, wherein the first information further comprises a second identifier, and the second identifier identifies a feature, a functionality, or a model; and
the first configuration information is used for configuring a second feature, a second functionality, or a second model, the second feature is at least one of the N1 features, the second feature is different from the first feature, the second functionality is at least one of the N2 functionalities, the second functionality is different from the first functionality, the second model is at least one of the N3 models, and the second model is different from the first model.

13. The method according to claim 10 or 11, wherein the first information further comprises a second identifier and second configuration information, the second identifier identifies a feature, a functionality, or a model, the second configuration information is used for configuring all or a part of models associated with L1 features, all or a part of models associated with L2 functionalities, or L3 models, the L1 features correspond to K1 functionalities, the K1 functionalities correspond to K2 models, the K2 models are all or the part of the models associated with the L1 features, and K1, K2, L1, L2, and L3 are all positive integers; and
the second configuration information is applied to a third feature, a third functionality, or a third model, the third feature is at least one of the L1 features, the third functionality is at least one of the L2 functionalities, and the third model is at least one of the L3 models.

14. The method according to claim 10 or 11, wherein the first configuration information is used for configuring all or the part of the models associated with the N1 features, the first information further comprises third configuration information, and the third configuration information is used for configuring all or the part of the models associated with the N1 features.

15. The method according to claim 14, wherein the first configuration information is used for configuring a first part model associated with the first feature, and the third configuration information is used for a second part model associated with the first feature, wherein
the first part model is different from the second part model.

16. The method according to any one of claims 10 to 15, wherein before receiving the first information, the method further comprises:
receiving a first request, wherein the first request is used for requesting to configure the N1 features, the N2 functionalities, or the N3 models; and/or is used for requesting to provide P1 configurations for the N1 features, provide P2 configurations for the N2 functionalities, or provide P3 configurations for the N3 models, and P1, P2, and P3 are all positive integers.

17. The method according to any one of claims 10 to 16, wherein that the first configuration information is used for configuring all or the part of the models associated with the N1 features, all or the part of the models associated with the N2 functionalities, or the N3 models comprises:
the first configuration information is used for configuring all or the part of the models associated with the N1 features at a first stage, all or the part of the models associated with the N2 functionalities at the first stage, or the N3 models at the first stage, wherein
the first stage comprises at least one of the following: a training stage, an inference stage, or a monitoring stage.

18. The method according to any one of claims 10 to 17, wherein that the first configuration information is used for configuring all or the part of the models associated with the N1 features, all or the part of the models associated with the N2 functionalities, or the N3 models comprises:
the first configuration information is used for configuring all or the part of the models associated with the N1 features of a first requirement, all or the part of the models associated with the N2 functionalities of the first requirement, or the N3 models of the first requirement, wherein
the first requirement comprises at least one of the following: a high-accuracy requirement, a medium-accuracy requirement, or a low-accuracy requirement.

19. A communication apparatus, configured to implement the method according to any one of claims 1 to 9.

20. The communication apparatus according to claim 19, wherein the communication apparatus comprises user equipment, a unit, a processor, or a chip.

21. A communication apparatus, configured to implement the method according to any one of claims 10 to 18.

22. The communication apparatus according to claim 21, wherein the communication apparatus comprises a network device, a unit, a processor, or a chip.

23. A computer-readable storage medium, wherein the storage medium stores a computer program or instructions, and when the computer program or the instructions are executed by a communication apparatus, the method according to any one of claims 1 to 18 is implemented.

24. A computer program product, wherein when the computer program product is executed by a computer, the computer is caused to perform the method according to any one of claims 1 to 18.
